**Europäisches Patentamt**

**European Patent Office**

**Office européen des brevets**

(19)

(11) Veröffentlichungsnummer: **0 185 991**

**A1**

# (12) EUROPÄISCHE PATENTANMELDUNG

(21) Anmeldenummer: **85115407.0**

(22) Anmeldetag: **04.12.85**

(51) Int. Cl.⁴: **G 05 B 15/02**
**H 02 J 3/14**

(30) Priorität: **19.12.84 DE 3446394**

(43) Veröffentlichungstag der Anmeldung:
**02.07.86 Patentblatt 86/27**

(84) Benannte Vertragsstaaten:
**AT BE CH DE FR GB IT LI NL**

(71) Anmelder: **Linde Aktiengesellschaft**
**Abraham-Lincoln-Strasse 21**
**D-6200 Wiesbaden(DE)**

(72) Erfinder: **Böckmann, Gerd**
**Kostheimer Landstrasse 17**
**D-6502 Mainz-Kostheim(DE)**

(72) Erfinder: **Bloch, Edwin**
**Einsteinstrasse 17**
**D-6090 Rüsselsheim(DE)**

(72) Erfinder: **Breitenbach, Otto**
**Raunheimer Strasse 34**
**D-6502 Mainz-Kostheim(DE)**

(74) Vertreter: **Schaefer, Gerhard, Dr.**
**Linde Aktiengesellschaft Zentrale Patentabteilung**
**D-8023 Höllriegelskreuth(DE)**

(54) **Steuergerät.**

(57) Es wird ein Steuergerät für elektrische Verbraucher in einem Supermarkt beschrieben. Um eine Möglichkeit zur Energieeinsparung anzubieten, mit der eine Verringerung des Gesamtstromverbrauches in kWh, eine Verringerung der Lastspitze in kW sowie eine Warnung bei Störung der Kälteanlage erzielt werden kann, ist das Steuergerät mit einer Zentraleinheit (4), einer digitalen Schaltuhr (2), einer Input/Output-Karte (3) sowie Netzteilen ausgestattet.

Fig.1

EP 0 185 991 A1

## Steuergerät

Die Erfindung betrifft ein Steuergerät für elektrische Verbraucher in einem Supermarkt.

Die Energiekosten sind mittlerweile zu einem sehr beträchtlichen Faktor im Supermarktbereich geworden. Betrachtet man zum Beispiel Supermärkte in der Größenordnung von 800 bis 1000 m² Verkaufsfläche, so erhält man folgende Werte für die Anteile an den Energiekosten: 75% Strom, 20% Heizung, 5% Wasser u.a.

Da der weitaus größte Teil der Stromkosten für die installierte Kälteanlage entsteht, sollte man hier versuchen, mit energiesparenden Maßnahmen die Kosten zu senken. Bisher werden Supermärkte dezentral gesteuert. Die Verbraucher können unabhängig voneinander einschalten. Der Energieeinsatz ist nicht kontrolliert.

Der Erfindung liegt daher die Aufgabe zugrunde, eine technisch sinnvolle Möglichkeit zur Energieeinsparung im Supermarktbereich anzubieten, mit der eine Verringerung des Gesamtstromverbrauches in kWh, eine Verringerung der Lastspitze in kW sowie eine Warnung bei Störung der Kälteanlage erzielt werden kann.

Diese Aufgabe wird erfindungsgemäß dadurch gelöst, daß ein Steuergerät mit einer Zentraleinheit, einer digitalen Schaltuhr, einer Input/Output-Karte sowie Netzteilen eingesetzt wird. Das erfindungsgemäße Steuergerät arbeitet zentral, d.h. es steuert die Kälteanlage abhängig vom Raumzustand, Wochentag und der Uhrzeit. Es wird vermieden, daß gleichzeitig alle Verdichter der Kälteanlage eingeschaltet sind (Lastverteilung). Es können aber auch andere elektrische Verbraucher zeit- und bedarfsabhängig geschaltet werden, z.B. Beleuchtung, Nachtrollos, Heißwassergeräte, Wärmerückgewinnungspumpen, Heizung, Lüftung.

Durch die zentrale Verknüpfung aller Schaltvorgänge ist ein kontrollierter und somit wirtschaftlicher Energieeinsatz möglich. Außerdem können durch Erfassen von Verdichterschaltungen Ausfälle frühzeitig erkannt und weitergeleitet werden.

Erfindungsgemäß besteht die Zentraleinheit aus einem Einplatinencomputer mit einem Mikroprozessor. Auf dieser Platine befinden sich dabei 16 Eingänge und 16 Ausgänge, die jeweils mit der Input/Output-Karte (I/O-Karte) verbunden sind. In den Eingängen werden hauptsächlich Schaltzustände registriert, wie z.B. Verdichter 1 "aus", 2/3 Beleuchtung "ein", aber auch Raum- und Außentemperatur. In dem Computer wird der Programmablauf durch einen Arbeitsspeicher RAM gesteuert. Änderungen können über ein Handprogrammiergerät, mit dem die Zentraleinheit ausgestattet sein kann, vorgenommen werden. In dem internen Rechenwerk RAM finden die gesamten logischen Verknüpfungen statt, also Berechnungen, Vergleiche von Soll- und Istwerten, zeitliches Schalten elektrischer Verbraucher.

- 3 -

**0185991**

Die 16 Ausgänge (Digitalausgänge) steuern über die I/O-Karte die elektrischen Verbraucher an, z.B. Verdichter, Beleuchtung. Zusätzlich verfügt die Zentraleinheit über einen nichtflüchtigen Speicher, einem sogenannten EEPROM, der auch bei Netzausfall seinen Programminhalt behält.

Die Zentraleinheit kann ferner mit weiteren Schnittstellen ausgerüstet sein, nämlich neben dem Anschluß für das Handprogrammiergerät mit einem Anschluß für ein Erweiterungssystem, einem Anschluß für Systemtest und/oder einem Drucker. Mit letzterem können Programme dreisprachig (deutsch, englisch, französisch) ausgedruckt, extern gespeichert und von außen geladen werden.

Das Erweiterungssystem besteht wiederum aus Platine, wobei nochmals eine I/O-Karte nötig ist. Somit erhält man insgesamt 32 Ein- und Ausgänge. Die maximale Ausbaustufe hat 64 Ein- und Ausgänge, d.h. maximal drei Erweiterungsplatinen.

Nach einer weiteren Ausgestaltung sind auf der I/O-Karte 16 Ausgänge über Relais (220 V, 6 A) und 16 Eingänge (z.B. 10 x 220 V über Optokoppler und 6 x 24 V) angeordnet. Dabei befindet sich bevorzugt neben jedem Relais ein Handschalter, mit dem man einzelne Ausgänge vom Betrieb durch Steuergerät auf normalen Thermostatbetrieb umschalten kann. Außerdem wird auf dieser Karte die Temperaturumsetzung vorgenommen, wozu ein Anschluß für Raum- und Außentemperatur vorhanden ist. Zum Erfassen der Raum- und Außentemperatur können beispielsweise Halbleiterfühler oder fest eingestellte Mehrbereichthermostate zur Anwendung gelangen. Zur digitalen Einlösung der Temperatur ist ein Spannungs- Frequenz-Wandler erforderlich, der auf der I/O-Karte aufgebaut ist.

Im folgenden seien die Belegungen der Ein- bzw. Ausgänge beispielhaft aufgezählt.

| Eingangsbelegung | | Ausgangsbelegung | |
|---|---|---|---|
| Input | Benennung | Output | Benennung |
| O | Uhrimpuls | O - 15 | Kühlmöbel, |
| 1 | Temperaturerfassung | | Kühlräume, |
| 2 | Sommer-/Winterzeit | | Nachtrollo, |
| 3,4,5 | z.B. Warnthermostate, | | Nachtabde-ckung, |
| | Lastabwurf u.a. | | Beleuchtung, |
| 6-15 | Rückmeldungen von | | Heißwasser-geräte, |
| | Verdichtern und | | |
| | Beleuchtung | | Warnung u.a. |

Es sei noch erwähnt, daß das Steuergerät intern von einem 5 V und einem 24 V Netzteil versorgt wird.

Weiterhin ist das Steuergerät vorteilhaft mit einem zusätzlichen Bedienungs- und Warntableau ausgestattet. Dieses Tableau befindet sich bevorzugt im Büro des Supermarktleiters. Es dient dazu, beschränkt in den Programmablauf einzugreifen. Man hat beispielsweise die Möglichkeit, die Beleuchtung oder die Nachtrollos außerhalb der üblichen Schaltzeiten zu beeinflussen. Die Kälteanlagensteuerung dagegen kann nicht manipuliert werden.

Überdies wird hier eine Warnung optisch und/oder akustisch angezeigt.

Das Bedienungs- und Warntableau weist überdies einen Schlüsselschalter zur Umstellung auf Sommerzeit auf, so daß eine Stunde Zeitverschiebung im Programmablauf berücksichtigt wird. Der Vorteil dieser Handschaltung liegt darin, daß keine Änderung der Software nötig ist, sollte

**0185991**

die Sommerzeit wieder abgesetzt werden.

Da die Umstellung der Zeit immer in der Nacht von Samstag auf Sonntag erfolgt, braucht der Markleiter lediglich an diesem betreffenden Samstag den Schlüsselschalter zu betätigen. Die Uhrzeit spielt dabei keine Rolle.

Es besteht überdies die Möglichkeit, eine Warnung über die Telefonleitung weiterzuleiten. Hierzu kann ein automatischer Störungsmelder zum Anschluß an Haupt- und Nebenanschlüsse des öffentlichen Fernsprechnetzes vorgesehen werden.

In dem Steuergerät wird auf eine "echte" Lastabwurffunktion verzichtet, da man davon ausgeht, daß eine erhebliche Reduzierung der Spitzenlast durch die optimale Lastverteilung der Kältemaschinen eintritt. Ist jedoch eine absolute Maximumbegrenzung erwünscht, so kann dies durch eine Erweiterung geschehen. Kostengünstig ist eine Realisierung jedoch nur dann, wenn vom Elektroversorgungsunternehmen ein Impulsgeber - Zähler eingebaut wird, von dem das Meßsignal und die Meßimpulse abgenommen werden können.

Im folgenden seien tabellarisch die Funktionen und Vorteile des Steuergerätes dargestellt:

| Wirkungspunkt | Verfahrensweise | Vorteile |
|---|---|---|
| Kühlmöbel | Erfassung von Raum- und Außentemperatur | Umgebungsbedingungen haben größeren Einfluß, als bei konventioneller Thermostatsteuerung |
| Kühlraum | Erfassung der tatsächlichen Laufzeit des Verdichters über Rückmeldung | |
| | Interne Berechnung der notwendigen Einschaltdauer | Verringerung der Einschalthäufigkeit |
| | | Längere Lebensdauer der Verdichter |
| | Verschiebung der Ein- und Ausschaltphasen gegeneinander | Vermeidung der Lastspitzen |
| | | Kein gleichzeitiges Einschalten der Verdichter |
| Nachtrollo bei Kühlregalen und Tiefkühlinseln | Pünktliches Hinauf- und Herunterfahren (Sommer-Winterzeit ist berücksichtigt) | Kälteverluste der Kühlmöbel werden vermieden |
| | | Wesentliche Energieersparnis |
| | Verringerung der Einschaltdauer, Temperaturkonstanthaltung | |
| Verkaufsraumbeleuchtung | Zeit- und zonenweises Ein- und Ausschalten | Nur volle Beleuchtung bei geöffnetem Laden |
| Boiler, Heißwassergeräte | Zeitliches Ein- und Ausschalten | Bedarfsgerechtes Einschalten (Pausenzeiten) |
| | | Am Wochenende und in der Nacht ganz ausgeschaltet |
| Wärmerückgewinnungspumpe | Zeitschaltung | Nur am Tag eingeschaltet |
| Lüftung/Heizung | Zeiteinschaltung | Außer einer gewissen Vorheizzeit nur am Tage eingeschaltet |

| Rahmenheizung (z.B.ATR,AGB) | Taktschaltung in der Nacht, je nach Raumbedingungen | Energieersparnis, auch durch geringeren Kältebedarf des Kühlmöbels |
| --- | --- | --- |
| Warnung | Verfahrensweise | Vorteile |
| für Plus-Möbel und -Räume | Abfragen der Sicherheitskette im Steuerkreis des Verdichters. Schaltet der Verdichter während einer vorher definierten Zeit nicht ein, so erfolgt die Warnung | Registrierung von Verdichterausfällen, ohne das Thermometer im Kühlraum zu beobachten. |
| für TK-Möbel und -Räume | Abfrage der Sicherheitskette (wie vorher) | Registrierung von Verdichterausfällen, oft bevor der Schaden am Thermometer abgelesen werden könnte (Früherkennung) |
| | zusätzliche Warnthermostate | Unzulässige Temperaturen werden erfasst (z.B. bei Kältemittelfüllungsmangel) |

Als zusätzliche Warnfunktionen sind möglich:

- Temperaturüberwachung für Plus-Kühlung

- Temperaturüberwachung Maschinenraum

- Netzausfall "Kleinkälte"

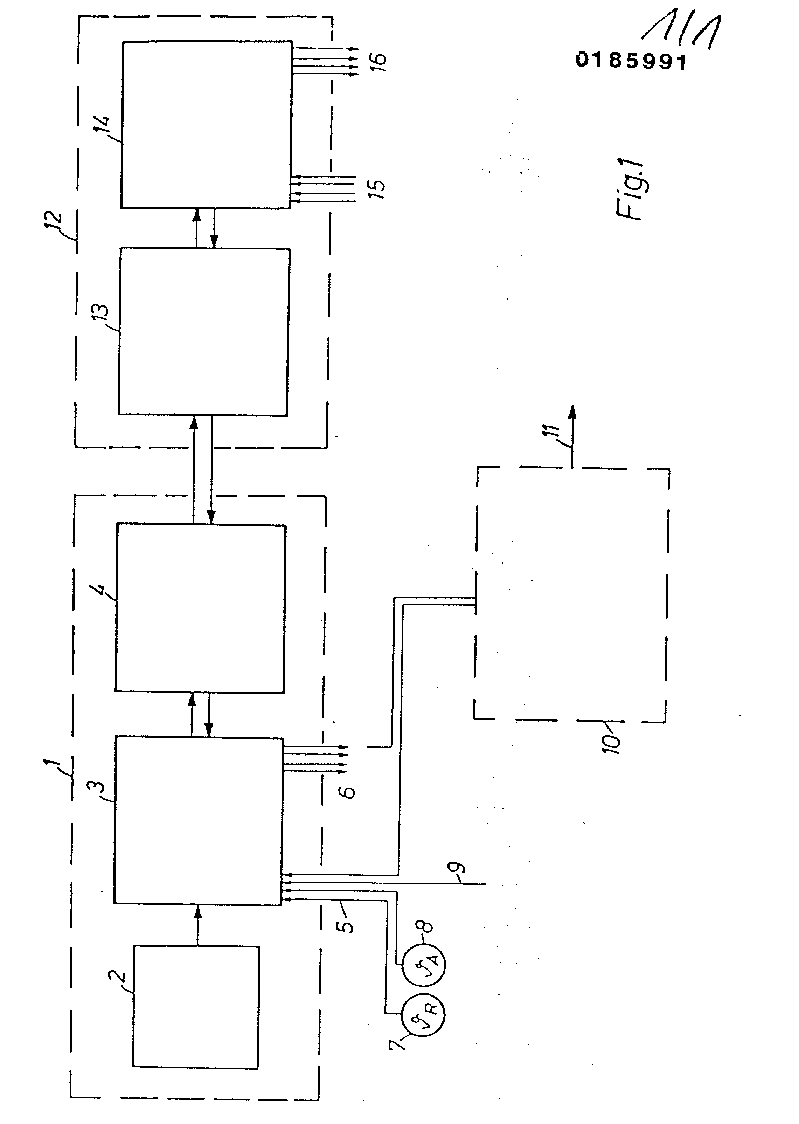

In dem Blockschaltbild der Figur ist das Steuergerät nochmals schematisch dargestellt.

Mit 1 ist hierbei das Grundgerät bezeichnet, das aus einer elektrischen Schaltuhr 2, einer I/O-Karte 3 mit Spannungsfrequenzwandler und eine mikroprozeßgesteuerten Zentraleinheit 4 besteht. An die I/O-Karte sind dabei 16 Eingänge 5 sowie 16 Ausgänge 6 angeschlossen. Die Eingänge sind teilweise mit Raum- und Außentemperaturfühlern 7,8, einem Impulsgeber - Zähler 9 sowie einem Warntableau 10 verbunden, mit dem auch die Ausgänge 6 in Verbindung stehen.

0185991

Das Warntableau 10 weist Warnanzeigen sowie einen Umschalter für Sommer/Winterzeit auf und ist mit einem Telefonwählgerät 11 verbunden.

Neben dem Grundsystem 1 können ein oder mehrere Erweitungssysteme 12 vorhanden sein. Dazu ist an die Zentraleinheit 4 des Grundsystems eine Erweiterungsplatine 13 sowie eine weitere I/O-Karte 14 mit weiteren 16 Eingängen 15 und 16 Ausgängen 16 angeschlossen.

Das gesamte Steuergerät ist dabei in einem handlichen Gehäuse untergebracht und kann sowohl an bereits vorhandene Geräte als auch bei Neuasstattungen von Supermärkten angeschlossen werden.

## Patentansprüche

1. Steuergerät für elektrische Verbraucher in einem Supermarkt gekennzeichnet durch eine Zentraleinheit (4),
eine digitale Schaltuhr (2), eine Input/Output-Karte (3)
sowie Netzteile.

2. Steuergerät nach Anspruch 1, dadurch gekennzeichnet,
daß die Zentraleinheit (4) aus einem Einplatinencomputer
mit einem Mikroprozessor besteht.

3. Steuergerät nach Anspruch 2, dadurch gekennzeichnet,
daß sich auf der Platine 16 Eingänge (5) und 16 Ausgänge
(6) befinden, die jeweils mit der Input/Output-Karte
(3) verbunden sind.

4. Steuergerät nach einem der Ansprüche 1 bis 3, dadurch
gekennzeichnet, daß die Zentraleinheit (4) mit einem
Anschluß für ein Handprogrammiergerät, einem Drucker,
einem Anschluß für ein Erweiterungssystem (12) und/oder
einem Anschluß für Systemtest ausgestattet ist.

5. Steuergerät nach Anspruch 1, dadurch gekennzeichnet, daß auf der Input/Output-Karte (3) 16 Ausgänge über Relais und 16 Eingänge über Optokoppler angeordnet sind.

6. Steuergerät nach Anspruch 5, dadurch gekennzeichnet, daß neben jedem Relais ein Hanschalter angeordnet ist.

7. Steuergerät nach Anspruch 1, gekennzeichnet durch ein zusätzliches Bedienungs- und Warntableau (10).

8. Steuergerät nach Anspruch 7, dadurch gekennzeichnet, daß das Bedienungs- und Warntableau (10) einen Schlüsselschalter zu Umstellung auf Sommerzeit aufweist.

9. Steuergerät nach Anspruch 1, gekennzeichnet durch Anschlußmöglichkeit an einen automatischen Störungsmelder.

Fig.1

0185991

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | GLASS TECHNOLOGY, Band 22, Nr. 3, Juni 1981, Seiten 113-117, Huddersfield, GB; R.S. WEBB: "The application of the GEM 80 microprocessor system to industrial and process control" * Seite 113, rechte Spalte, Zeile 10 - Seite 116, linke Spalte, Zeile 36 * | 1-5,7, 9 | G 05 B 15/02 H 02 J 3/14 |
| | --- | | |
| X | DE-A-3 215 405 (LINDE) * Anspruch 1 * | 1 | |
| | --- | | |
| X | US-A-4 293 915 (CARPENTER et al.) * Zusammenfassung * | 1 | |
| | --- | | RECHERCHIERTE SACHGEBIETE (Int Cl 4) |
| X | US-A-4 370 723 (HUFFMAN et al.) * Zusammenfassung * | 1 | |
| | ----- | | G 05 B H 02 J |

Der vorliegende Recherchenbericht wurde für alle Patentansprüche erstellt

| Recherchenort DEN HAAG | Abschlußdatum der Recherche 23-03-1986 | Prüfer KOLBE W.H. |
|---|---|---|